# EUROPÄISCHE PATENTSCHRIFT

(11) **EP 1 231 839 B1**
(45) Veröffentlichungstag und Bekanntmachung des Hinweises auf die Patenterteilung: **14.05.2003**
(21) Anmeldenummer: 00981250.4
(22) Anmeldetag: 11.11.2000
(51) Int. Cl.: A01N 47/36

(54) **HERBIZID-KOMBINATION MIT ACYLIERTEN AMINOPHENYLSULFONYLHARNSTOFFEN**
HERBICIDE MEANS WITH ACYLATED AMINO PHENYL SULFONYL CARBAMIDE
COMBINAISON D'HERBICIDES COMPORTANT DES AMINOPHENYLSULFONYLUREES ACYLEES

(30) Priorität: 15.11.1999 DE 19955056
(43) Veröffentlichungstag der Anmeldung: 21.08.2002
(73) Patentinhaber: Bayer CropScience GmbH, 65929 Frankfurt/Main (DE)
(72) Erfinder: HACKER, Erwin, 65239 Hochheim (DE); BIERINGER, Hermann, 65817 Eppstein (DE)
(86) Internationale Anmeldenummer: EP0011185
(87) Internationale Veröffentlichungsnummer: WO01035742

(56) Entgegenhaltungen:
- WO-A-95/29899

## Beschreibung

Die Erfindung liegt auf dem technischen Gebiet der Pflanzenschutzmittel, die gegen Schadpflanzen z.B. in Pflanzenkulturen eingesetzt werden können und als Wirkstoffe eine Kombination von mindestens zwei Herbiziden enthalten.

Aus der Druckschrift WO 95/29899 sind acylierte Aminophenylsulfonylharnstoffe und deren Salze sowie deren Verwendung als Herbizide und/oder Pflanzenwachstumsregulatoren bekannt. Unter Verbindungen dieser Strukturklasse sind von besonderem Interesse die Verbindungen der Formel (I) und deren Salze, 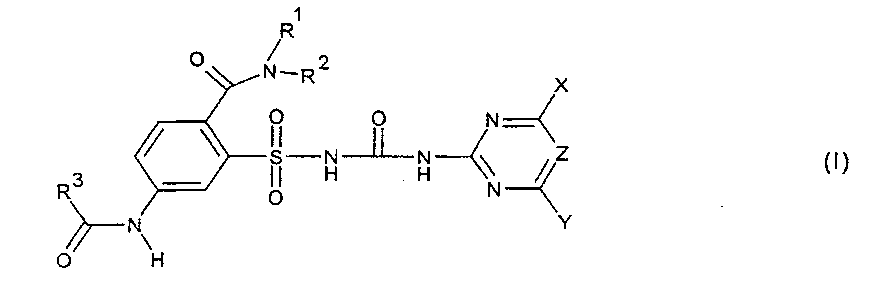 worin
- R¹: Wasserstoff oder (C₁-C₄)Alkyl, vorzugsweise Methyl oder Ethyl, insbesondere Methyl,
- R²: Wasserstoff oder (C₁-C₄)Alkyl, vorzugsweise Methyl oder Ethyl, insbesondere Methyl,
- R³: Wasserstoff, (C₁-C₄)Alkyl, (C₁-C₄)Alkoxy, (C₂-C₄)Alkenoxy, (C₂-C₄)Alkinoxy, (C₃-C₆)Cycloalkyl, wobei jeder der 5 letztgenannten Reste unsubstituiert oder durch einen oder mehrere Reste aus der Gruppe Halogen, Cyano, (C₁-C₄)Alkoxy und (C₁-C₄)Alkylsulfonyl substituiert ist,
vorzugsweise Wasserstoff, Methyl, Trifluormethyl, Ethyl, n-Propyl, Isopropyl, Cyclopropyl, Methoxy oder Ethoxy, vorzugsweise Wasserstoff, Methyl oder Methoxy, insbesondere Wasserstoff,
einer der Reste X und Y Halogen, (C₁-C₄)Alkyl, (C₁-C₄)Alkoxy, (C₁-C₄)Alkylthio, wobei jeder der drei letztgenannten Reste unsubstituiert oder durch einen oder mehrere Reste aus der Gruppe Halogen, (C₁-C₄)Alkoxy und (C₁-C₄)Alkylthio substituiert ist,
und der andere der Reste X und Y (C₁-C₄)Alkyl, (C₁-C₄)Alkoxy oder (C₁-C₄)Alkylthio ist, wobei jeder der drei letztgenannten Reste unsubstituiert oder durch einen oder mehrere Reste aus der Gruppe Halogen, (C₁-C₄)Alkoxy und (C₁-C₄)Alkylthio substituiert ist,
insbesondere X und Y jeweils Methoxy, und
- Z: CH oder N, insbesondere CH bedeuten.

Die Wirksamkeit dieser Herbizide gegen Schadpflanzen in den Pflanzenkulturen liegt auf einem hohen Niveau, hängt jedoch im allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbzide oder geographisch begrenzt auftreten können. Wirkungsverluste bei einzelnen Schadpflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höhere Aufwandmenge nicht eintritt. Teilweise kann die Selektivität in Kulturen durch Zusatz von Safenem verbessert werden. Generell besteht jedoch immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten Herbizide der Formel (I) oder deren Salzen in Kombination mit bestimmten strukturell verschiedenen Herbiziden in besonders günstiger Weise zusammenwirken, z.B. wenn sie in Pflanzenkulturen eingesetzt werden, die für die selektive Anwendung der Herbizide, gegebenenfalls unter Zusatz von Safeners, geeignet sind.

Gegenstand der Erfindung sind somit Herbizid-Kombinationen mit einem wirksamen Gehalt an Komponenten (A) und (B), wobei
(A) ein oder mehrere Herbizide aus der Gruppe der Verbindungen der Formel (I) oder deren Salzen bedeutet, 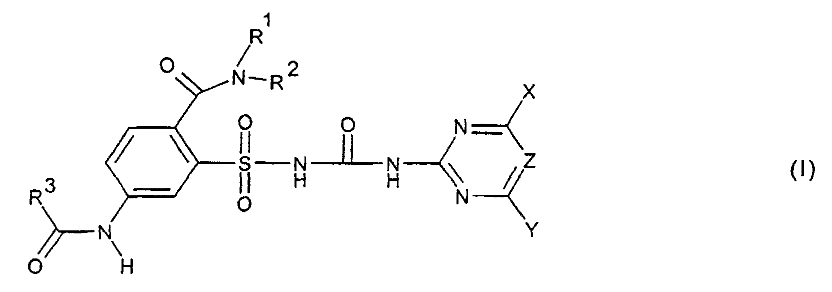 worin
   - R¹: Wasserstoff oder (C₁-C₄)Alkyl, vorzugsweise Methyl oder Ethyl, insbesondere Methyl,
   - R²: Wasserstoff oder (C₁-C₄)Alkyl, vorzugsweise Methyl oder Ethyl, insbesondere Methyl,
   - R³: Wasserstoff, (C₁-C₄)Alkyl, (C₁-C₄)Alkoxy, (C₂-C₄)Alkenoxy, (C₂-C₄)Alkinoxy, (C₃-C₆)Cycloalkyl, wobei jeder der 5 letztgenannten Reste unsubstituiert oder durch einen oder mehrere Reste aus der Gruppe Halogen, Cyano, (C₁-C₄)Alkoxy und (C₁-C₄)Alkylsulfonyl substituiert ist,
   vorzugsweise Wasserstoff, Methyl, Trifluormethyl, Ethyl, n-Propyl, Isopropyl, Cyclopropyl, Methoxy oder Ethoxy, vorzugsweise Wasserstoff, Methyl oder Methoxy, insbesondere Wasserstoff,
   einer der Reste X und Y Halogen, (C₁-C₄)Alkyl, (C₁-C₄)Alkoxy, (C₁-C₄)Alkylthio, wobei jeder der drei letztgenannten Reste unsubstituiert oder durch einen oder mehrere Reste aus der Gruppe Halogen, (C₁-C₄)Alkoxy und (C₁-C₄)Alkylthio substituiert ist,
   und der andere der Reste X und Y (C₁-C₄)Alkyl, (C₁-C₄)Alkoxy oder (C₁-C₄)Alkylthio ist, wobei jeder der drei letztgenannten Reste unsubstituiert oder durch einen oder mehrere Reste aus der Gruppe Halogen, (C₁-C₄)Alkoxy und (C₁-C₄)Alkylthio substituiert ist,
   insbesondere X und Y jeweils Methoxy, und
   - Z: CH oder N, insbesondere CH bedeuten
   und
(B) bedeutet ein oder mehrere Herbizide aus der Gruppe der Verbindungen, bestehend aus (Angabe mit dem "common name" und der Referenzstelle aus "The Pesticide Manual" 11th Ed., British Crop Protection Council 1997, abgekürzt "PM")
   - (B1): selektiv in einigen dikotylen Kulturen gegen monokotyle und dikotyle Schadpflanzen wirksamen Herbiziden, ausgewählt aus der Gruppe bestehend aus:
   (B1.1) Ethofumesate (PM, S. 484-486), d. h. Methansulfonsäure-(2-ethoxy-2,3 dihydro-3,3-dimethylbenzofuran-5-yl)-ester, (Aufwandmenge: 10 - 3000g AS/ha, vorzugsweise 20 - 1500g AS/ha; Aufwandmengenverhältnis A : B = 1: 1000 - 12 : 1, vorzugsweise 1 : 300 - 4 : 1);
   (B1.2) Chloridazon (PM, S. 215-216), d. h. 5-Amino-4-chlor-2-phenyl-pyridazin-3(2H)-on, (Aufwandmenge: 50 - 3000g AS/ha, vorzugsweise 80 - 2000g AS/ha; Aufwandmengenverhältnis A : B = 1 : 3000 - 1 : 1, vorzugsweise1 : 700 - 1 : 3);
   (B1.3) Triflusulfuron und dessen Ester, wie der Methylester, (PM, S. 1250-1252), d.h. 2-[4-(Dimethylamino)-6-(2,2,2-trifluorethoxy)-1,3,5-triazin-2-yl]-carbamoylsulfamoyl]-6-methyl-benzoesäure bzw. -methylester, (Aufwandmenge: 1 - 50g AS/ha, vorzugsweise 2 - 40g AS/ha; Aufwandmengenverhältnis A : B = 1 : 50 - 1 : 2, vorzugsweise 1 : 15 - 1 : 3);
   (B1.4) Metamitron (PM, S. 799-801), d.h. 4-Amino-4,5-dihydro-3-methyl-6-phenyl-1,2,4-triazin-5-on, (Aufwandmenge: 50 - 5000g AS/ha, vorzugsweise 80 - 4000g AS/ha; Aufwandmengenverhältnis A : B = 1 : 5000 - 1 : 1 , vorzugsweise 1 : 1300 - 1 : 2)
   (B1.5) Metazachlor (PM, S. 801-803), d. h. 2-Chlor-N-(2,6-dimethylphenyl)-N-(1H-pyrazol-1-ylmethyl)-acetanilid, (Aufwandmenge: 100 - 3000 g AS/ha, vorzugsweise 200 - 2500 g AS/ha; Aufwandmengenverhältnis A : B = 1 : 3000 - 2 : 1, vorzugsweise 1 : 800 - 1 : 1);
   (B1.6) Napropamide (PM, S. 866-868), d. h. (R,S)-N,N-Diethyl-2-(1-naphthyloxy)-propanamid, (Aufwandmenge: 200 - 3000 g AS/ha, vorzugsweise 300 - 2500 g AS/ha; Aufwand mengenverhältnis A : B = 1 : 3000 - 4 : 1, vorzugsweise 1 : 800 - 2 : 1);
   (B1.7) Carbetamide (PM, S. 184-185), d. h. (R)-Carbanilinsäure-1-(ethylcarbamoyl)-ethylester, (Aufwandmenge: 500 - 5000 g AS/ha, vorzugsweise 800 - 4000 g AS/ha; Aufwandmengenverhältnis A : B = 1 : 5000 - 10 : 1, vorzugsweise 1 : 1300 - 5 : 1);
   (B1.8) Dimefuron (PM, S. 403-404), d. h. 3-[4-(5-tert.-Butyl-2,3-dihydro-2-oxo-1,3,4-oxadiazol-3-yl)-3-chlorphenyl]-N, N-dimethylharnstoff; (Aufwandmenge: 200 - 4000 g AS/ha, vorzugsweise 300 - 3000 g AS/ha; Aufwandmengenverhältnis A : B = 1 : 4000 - 3 : 1, vorzugsweise 1 : 1000 - 2 : 1);
   (B1.9) Dimethachlor (PM, S. 406-407), 2-Chlor-N-(2,6-dimethylphenyl)-N-(2-methoxyethyl)-aceto-2',6'-xylilid, (Aufwandmenge: 30-4000 g AS/ha, vorzugsweise 200 - 3000 g AS/ha; Aufwandmengenverhältnis A : B = 1 : 4000 - 2 : 1, vorzugsweise 1 : 1000 - 1 : 1);
   (B1.10) Norflurazon (PM, S. 886-888), d. h. 4-Chlor-5-(methylamino)-2-[3-(trifluormethyl)-phenyl]-3-(2H)-pyridazinon (Aufwandmenge: 500 - 6000 g AS/ha, vorzugsweise 400 - 5000 g AS/ha;
   Aufwandmengenverhältnis A : B = 1 : 6000 - 4 : 1, vorzugsweise 1 : 2000 - 3 : 1);
   (B1.11) Fluometuron (auch "Meturon", PM, S. 578-579), d. h. N,N-Dimethyl-N'-[3-(trifluormethyl)-phenyl]-hamstoff (Aufwandmenge: 100 - 3000 g AS/ha, vorzugsweise 200 - 2500 g AS/ha; Aufwandmengenverhältnis A : B = 1 : 3000 - 2 : 1, vorzugsweise 1 : 800 - 1 : 1);
   (B1.12) Methylarsonsäure der Formel CH₃As(=O)(OH)₂ und deren Salze wie DSMA = Dinatriumsalz oder MSMA = Mononatriumsalz von Methylarsonsäure (PM, S. 821-823) (Aufwandmenge: 500 - 7000 g AS/ha, vorzugsweise 600 - 6000 g AS/ha; Aufwandmengenverhältnis A : B = 1 : 7000 - 7 : 1, vorzugsweise 1 : 2000 - 5 : 1);
   (B1.13) Diuron (PM, S. 443-445), d. h. 3-(3,4-Dichlorphenyl)-1,1-dimethyl-harnstoff (Aufwandmenge 100 - 5000 g AS/ha, vorzugsweise 200 - 4000g AS/ha; Aufwandmengenverhältnis A : B = 1 : 5000 - 2 : 1, vorzugsweise 1 : 1300 - 1 : 1),
   (B1.14) Prometryn (Promethyrin) (PM, S. 1011-1013), d. h. N,N'-Bis(1-methylethyl)-6-methylthio)-2,4-diamino-1,3,5-triazin (Aufwandmenge: 50 - 5000 g AS/ha, vorzugsweise 80 - 4000 g AS/ha; Aufwandmengenverhältnis A : B = 1 : 5000 - 1 : 1, vorzugsweise 1 : 1300 - 1 : 2),
   (B1.15) Trifluralin (PM, S. 1248-1250), d.h. α,α,α-trifluoro-2,6-dinitro-N,N-dipropyl-p-toluol, (Aufwandmenge: 250 - 5000 g AS/ha, vorzugsweise 400 - 4000 g AS/ha; Aufwandmengenverhältnis A : B = 1 : 5000 - 1 : 1, vorzugsweise 1 : 1200 - 4 : 1);
   (B1.16) Sulfentrazone (PM, S. 1126-1127), d.h. 2',4'-dichloro-5'-(4-difluoromethyl-4,5-dihydro-3-methyl-5-oxo-1H-1,2,4-triazol-1-yl)methansulfonanilid, (Aufwandmenge: 50 - 2000 g AS/ha, vorzugsweise 70 - 1500 g AS/ha; Aufwandmengenverhältnis A : B = 1 : 2000 - 3 :1, vorzugsweise 1 : 500 - 1 : 1);
   (B1.17) Ethalfluralin (PM, S. 473-474), d.h. N-ethyl-α,α,α-trifluoro-N-(2-methylallyl)-2,6-dinitro-p-toluol, (Aufwandmenge: 250 - 5000 g AS/ha, vorzugsweise 500 - 4000 g AS/ha; Aufwandmengenverhältnis A : B = 1 : 5000 - 2 : 1, vorzugsweise 1 : 1300 - 1 : 5);
   (B1.18) Vernolate (PM, S. 1264-1266), d.h. S-propyl dipropylthiocarbamat, (Aufwandmenge: 250 - 5000 g AS/ha, vorzugsweise 500 - 4000 g AS/ha; Aufwandmengenverhältnis A : B = 1 : 5000 - 2 : 1, vorzugsweise 1 : 3000 - 1 : 5);
   (B1.19) Flumioxazin (PM, S. 576-577), d.h. N-(7-fluoro-3,4-dihydro-3-oxo-4-prop-2-ynyl-2H-1,4-benzoxazin-6-yl)cyclohex-1-ene-1,2-dicarboxamid, (Aufwandmenge: 10 - 500 g AS/ha, vorzugsweise 20 - 400 g AS/ha; Aufwandmengenverhältnis A : B = 1 : 500-12 : 1, vorzugsweise 1 : 300 - 5 : 1);
   - (B2): selektiv in einigen dikotylen Kulturen überwiegend gegen dikotyle Schadpflanzen wirksamen Herbiziden, ausgewählt aus der Gruppe bestehend aus
   (B2.1) Desmedipham (PM, S. 349-350), d.h., N-[3-(Ethoxycarbonylamino)phenyl]-carbaminsäure-phenyl-ester, (Aufwandmenge: 10 - 5000 g AS/ha, vorzugsweise 50 - 4000 g AS/ha; Aufwandmengenverhältnis A : B = 1 : 5000 - 1 : 2, vorzugsweise 1 : 1300 - 1 : 3);
   (B2.2) Phenmedipham(PM, S. 948-949), d.h. N-[3-(Methoxycarbonylamino)phenyl]-carbaminsäure-3-methylphenyl-ester, (Aufwandmenge: 10 - 5000 g AS/ha, vorzugsweise 50 - 4000 g AS/ha; Aufwandmengenverhältnis A : B = 1 : 5000 - 1 : 2, vorzugsweise 1 : 1300 - 1 : 3);
   (B2.3) Quinmerac (PM, S. 1080-1082), d.h., 7-Chlor-3-methyl-chinolin-8-carbonsäure, (Aufwandmenge: 10 - 1000 g AS/ha, vorzugsweise 20 - 800 g AS/ha; Aufwandmengenverhältnis A : B = 1 : 1000 - 1 : 4, vorzugsweise 1 : 260 - 1 : 5);
   (B2.4) Clopyralid (PM, S. 260-263), d. h. 3,6-Dichlorpyridin-2-carbonsäure und deren Salze, (Aufwandmenge: 20 - 1000 g AS/ha, vorzugsweise 30 - 800 g AS/ha; Aufwandmengenverhältnis A : B = 1 : 1000 - 7 : 1, vorzugsweise 1 : 260 - 3 : 1);
   (B2.5) Pyridate (PM, S. 1064-1066), d. h. O-(6-Chlor-3-phenylpyridazin-4-yl)-S-octyl-thiocarbonat, (Aufwandmenge: 100 - 5000 g AS/ha, vorzugsweise 200 - 3000 g AS/ha; Aufwandmengenverhältnis A : B = 1 : 5000 - 1,5 : 1, vorzugsweise 1 : 1000 - 1 : 1);
   (B2.6) Ethametsulfuron-methyl(PM, S. 475-476), d. h. 2-{N-[N-(4-Ethoxy-6-methylamino-1,3,5-triazin-2-yl)-aminocarbonyl]-aminosulfonyl}-benzoesäuremethylester; (Aufwandmenge: 1-500 g AS/ha, vorzugweise 2 - 300 g AS/ha; Aufwandmengenverhältnis A : B = 1 : 500 - 150 : 1, vorzugsweise 1 : 100 - 90 : 1);
   (B2.7) Pyrithiobac und dessen Salze, z. B. das Natriumsalz, (PM, S. 1073-1075), d. h. 2-Chlor-6-(4,6-dimethoxypyrimidin-2-ylthio)-benzoesäure-natriumsalz (Aufwandmenge: 5 - 300 g AS/ha, vorzugsweise 10 - 200 g AS/ha; Aufwandmengenverhältnis A : B = 1 : 300 - 1 : 9, vorzugsweise 1 : 200 - 1 : 15);
   (B2.8) Oxyfluorfen (PM, S. 919-921), d.h. 2-chloro-α,α,α-trifluoro-p-tolyl 3-ethoxy-4-nitrophenyl ether, (Aufwandmenge: 40 - 800 g AS/ha, vorzugsweise 60 - 600 g AS/ha;
   Aufwandmengenverhältnis A : B = 1 : 800 - 4 : 1, vorzugsweise 1 : 200 - 1 : 1);
   (B2.9) Fomesafen (PM, S. 616-618), d.h. 5-(2-chloro-α,α,α-trifluoro-p-tolyloxyl)-N-methylsulfonyl-2-nitrobenzamid, (Aufwandmenge: 250 - 5000 g AS/ha, vorzugsweise 500 - 4000 g AS/ha;
   Aufwandmengenverhältnis A : B = 1 : 5000 - 2 : 1, vorzugsweise 1 : 1300 - 6 : 1);
   (B2.10) Flumiclorac (PM, S. 575-576), d.h. [2-chloro-5-(cyclohex-1-ene-1,2-dicarboximido)-4-fluorophenoxy]essigsäure, und dessen Ester wie der Pentylester (Aufwandmenge: 10- 400 g AS/ha, vorzugsweise 20 - 300 g AS/ha; Aufwandmengenverhältnis A : B = 1 : 400 - 12 : 1, vorzugsweise 1 : 100 - 5 : 1);
   (B2.11) 2,4-DB (PM, S. 337-339), d.h. 4-(2,4-dichlorophenoxy)buttersäure, und dessen Ester und Salze (Aufwandmenge: 250 - 5000 g AS/ha, vorzugsweise 500 - 4000 g AS/ha; Aufwandmengenverhältnis A : B = 1 : 5000 - 1 : 2, vorzugsweise 1 : 1300 - 1 : 5);
   (B2.12) Diclosulam (vgl. AG CHEM New Compound Review, Vol. 17, (1999) Seite 37, triazolopyrimidin-sulfonanilid-Herbizid) 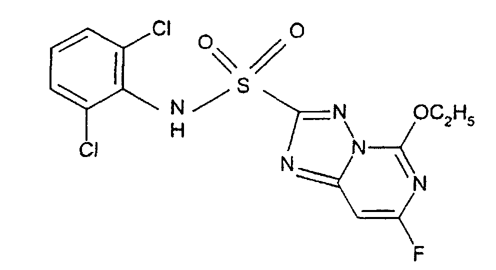 (Aufwandmenge: 5 - 150 g AS/ha, vorzugsweise 10-120 g AS/ha; Aufwandmengenverhältnis A : B = 1 : 150 - 30 : 1, vorzugsweise 1 : 40 - 9 : 1);
   (B2.13) Oxasulfuron (PM, S. 911-912), d.h. oxetan-3-yl 2-[(4,6-dimethylpyrimidin-2-yl)-carbamoylsulfamoyl]benzoat, (Aufwandmenge: 10-300 g AS/ha, vorzugsweise 20-200 g AS/ha; Aufwandmengenverhältnis A : B = 1 : 100 - 3 : 1, vorzugsweise 1 : 40 - 5 : 1);
   - (B3): selektiv in einigen dikotylen Kulturen überwiegend gegen monokotyle Schadpflanzen wirksamen Herbiziden ausgewählt aus der Gruppe bestehend aus
   (B3.1) Profluazol (AGROW, No. 338 October 15^{th}, 1999, S. 26, PJB Publications Ltd. 1999, WO 97/15576), d.h. 1-chloro-N-[2-chloro-4-fluoro-5-[(6S, 7aR)-6-fluorotetrahydro-1,3-dioxo-1H-pyrrolo[1,2-c]imidazol-2(3H)-yl]phenyl]-methansulfonamid, (Aufwandmenge 5 - 1000 g AS/ha, vorzugsweise 5 - 800 g AS/ha; Aufwandmengenverhältnis A : B = 1 : 350 - 25 : 1, vorzugsweise 1 : 160 - 10 : 1);
   B3.2) Amicarbazone (AGROW, No. 338 October 15^{th}, 1999, S. 26, PJB Publications Ltd. 1999, DE 3839206), d.h. 4-amino-N-(1,1-dimethylethyl)-4,5-dihydro-3-(1-methylethyl)-5-oxo-1H-1,2,4-triazol-1-carboxamid), (Aufwandmenge 5 - 1000 g AS/ha, vorzugsweise 5 - 800 g AS/ha; Aufwandmengenverhältnis A : B = 1 : 350 - 25 : 1, vorzugsweise 1 : 160 - 10 : 1);
   B3.3) Pyriftalid (AGROW, No. 338 October 15^{th}, 1999, S. 26, PJB Publications Ltd. 1999, WO 91/05781), d.h. 7-[(4,6-dimethoxy-2-pyrimidinyl)thio]-3-methyl-1(3H)-isobenzofuranon, (Aufwandmenge 5 - 1000 g AS/ha, vorzugsweise 5 - 800 g AS/ha; Aufwandmengenverhältnis A : B = 1 : 350 - 25 : 1, vorzugsweise 1 : 160 - 10 : 1);
   B3.4) Trifloxysulfuron und dessen Salze, z.B. das Natriumsalz, (AGROW, No. 338 October 15^{th}, 1999, S. 26, PJB Publications Ltd. 1999, WO 92/16522), d.h. N-[[(4,6-dimethoxy-2-pyrimidinyl)amino]carbonyl]-3-(2,2,2-trifluoroethoxy)-2-pyridinsulfonamid, (Aufwandmenge 5 - 1000 g AS/ha, vorzugsweise 5 - 800 g AS/ha; Aufwandmengenverhältnis A : B = 1 : 350 - 25 : 1, vorzugsweise 1 : 160 - 10 : 1);
   B3.5) Epocholeone (AGROW, No. 338 October 15^{th}, 1999, S. 26, PJB Publications Ltd. 1999, WO 94/28011), d.h. 1-[(1S)-1-[(2R, 3R)-3-[(1S)-1-ethyl-2-methylpropyl]oxiranyl]ethyl]hexadeca-hydro-10a,12a-dimethyl-8,9-bis(1-oxopropoxy)-(1R, 3aS, 3bS, 6aS, 8S, 9R, 10aR, 10bS, 12aS)-6H-Benz[c]indeno[5,4-e]oxepin-6-one, (Aufwandmenge 5 - 1000 g AS/ha, vorzugsweise 5 - 800 g AS/ha; Aufwandmengenverhältnis A : B = 1 : 350-25 : 1, vorzugsweise 1 : 160 - 10 : 1);
   B3.6) Tepraloxydim (DE 4222261), d.h. 2-[1-[[[(2E)-3-chloro-2-propenyl]oxy]imino]propyl]-3-hydroxy-5-(tetrahydro-2H-pyran-4-yl)-2-cyclohexen-1-on, (Aufwandmenge 5 - 1000 g AS/ha, vorzugsweise 5 - 800 g AS/ha; Aufwandmengenverhältnis A : B = 1 : 350 - 25 : 1, vorzugsweise 1 : 160 - 10 : 1);

Die erfindungsgemäßen Herbizid-Kombinationen weisen einen herbizid wirksamen Gehalt an Komponenten A und B auf und können weitere Komponenten enthalten, z. B. agrochemische Wirkstoffe anderer Art und/oder im Pflanzenschutz übliche Zusatzstoffe und/oder Formulierungshilfsmittel, oder zusammen mit diesen eingesetzt werden.

Die erfindungsgemäßen Herbizid-Kombinationen weisen synergistische Wirkungen auf. Die synergistischen Wirkungen werden bei gemeinsamer Ausbringung der Wirkstoffe (A) und (B) beobachtet, können jedoch häufig auch bei zeitlich versetzter Anwendung (Splitting) festgestellt werden. Möglich ist auch die Anwendung der einzelnen Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Beispielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

Die herbiziden Kombinationspartner aus der Gruppe (B1) wirken gegen mono- und dikotyle Schadpflanzen. Die herbiziden Kombinationspartner aus der Gruppe (B2) wirken überwiegend gegen dikotyle Schadpflanzen, können zum Teil aber auch gegen monokolyte Schadpflanzen wirksam sein. Die herbiziden Kombinationspartner aus der Gruppe (B3) wirken überwiegend gegen monokotyle Schadpflanzen, können zum Teil aber auch gegen dikotyle Schadpflanzen wirksam sein.

Die genannte Formel (I) umfaßt alle Stereoisomeren und deren Gemische, insbesondere auch racemische Gemische, und - soweit Enantiomere möglich sind - das jeweils biologisch wirksame Enantiomere. Verbindungen der Formel (I) und ihre Herstellung sind z.B. beschrieben in WO 95/29899. Beispiele für Wirkstoffe der Formel (I) sind Verbindungen der Formel (A1) und deren Salze 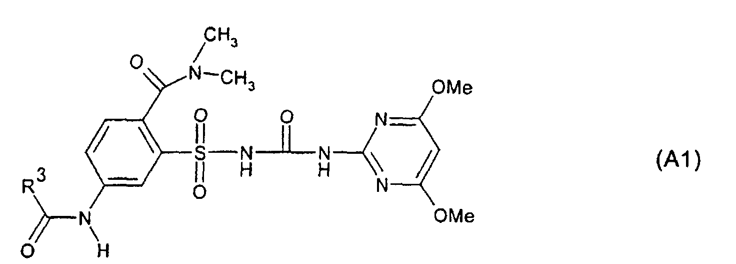 worin R³ definiert ist wie in Formel (I) und Me = Methyl ist, vorzugsweise die Verbindungen (A1.1) bis (A1.6)
- (A1.1): N-[N-(4,6-Dimethoxypyrimidin-2-yl)-aminocarbonyl]-2-(dimethyl-aminocarbonyl)-5-(formylamino)-benzolsulfonamid, d.h. Formel (A1) mit R³ =Wasserstoff, und dessen Salze, d.h. Foramsulfuron (AGROW No. 338, October 15^{th} 1999, Seite 26, PJB Publications Ltd. 1999);
- (A1.2): N-[N-(4,6-Dimethoxypyrimidin-2-yl)-aminocarbonyl]-2-(dimethyl-aminocarbonyl)-5-(acetylamino)-benzolsulfonamid, d.h. Formel (A1) mit R³ =Methyl, und dessen Salze;
- (A1.3): N-[N-(4,6-Dimethoxypyrimidin-2-yl)-aminocarbonyl]-2-(dimethyl-aminocarbonyl)-5-(propionylamino)-benzolsulfonamid, d.h. Formel (A1) mit R³ =Ethyl, und dessen Salze;
- (A1.4): N-[N-(4,6-Dimethoxypyrimidin-2-yl)-aminocarbonyl]-2-(dimethyl-aminocarbonyl)-5-(isopropylcarbonylamino)-benzolsulfonamid, d.h. Formel (A1) mit R³ =Isopropyl, und dessen Salze;
- (A1.5): N-[N-(4,6-Dimethoxypyrimidin-2-yl)-aminocarbonyl]-2-(dimethyl-aminocarbonyl)-5-(methoxycarbonylamino)-benzolsulfonamid, d.h. Formel (A1) mit R³ =Methoxy, und dessen Salze;
- (A1.6): N-[N-(4,6-Dimethoxypyrimidin-2-yl)-aminocarbonyl]-2-(dimethyl-aminocarbonyl)-5-(ethoxycarbonylamino)-benzolsulfonamid, d.h. Formel (A1) mit R³ =Ethoxy, und dessen Salze;

Weitere Beispiele für Wirkstoffe der Formel (I) sind Verbindungen der Formel (A2) und deren Salze 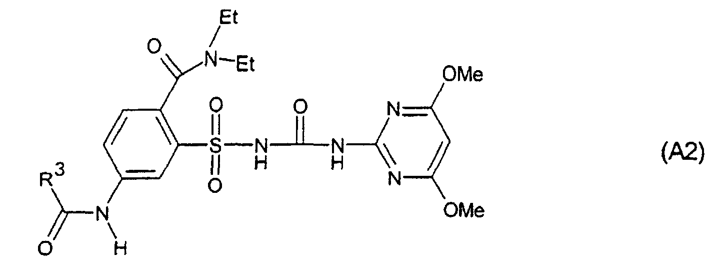 worin R³ definiert ist wie in Formel (I) und Me = Methyl und Et = Ethyl bedeuten, vorzugsweise die Verbindungen (A2.1) bis (A2.6)
- (A2.1): N-[N-(4,6-Dimethoxypyrimidin-2-yl)-aminocarbonyl]-2-(diethyl-aminocarbonyl)-5-(formylamino)-benzolsulfonamid,
d.h. Formel (A2) mit R³ =Wasserstoff, und dessen Salze;
- (A2.2): N-[N-(4,6-Dimethoxypyrimidin-2-yl)-aminocarbonyl]-2-(diethyl-aminocarbonyl)-5-(acetylamino)-benzolsulfonamid,
d.h. Formel (A2) mit R³ =Methyl, und dessen Salze;
- (A2.3): N-[N-(4,6-Dimethoxypyrimidin-2-yl)-aminocarbonyl]-2-(diethyl-aminocarbonyl)-5-(propionylamino)-benzolsulfonamid, d.h. Formel (A2) mit R³ =Ethyl, und dessen Salze;
- (A2.4): N-[N-(4,6-Dimethoxypyrimidin-2-yl)-aminocarbonyl]-2-(diethyl-aminocarbonyl)-5-(isopropylcarbonylamino)-benzolsulfonamid, d.h. Formel (A2) mit R³ =Isopropyl, und dessen Salze;
- (A2.5): N-[N-(4,6-Dimethoxypyrimidin-2-yl)-aminocarbonyl]-2-(diethyl-aminocarbonyl)-5-(methoxycarbonylamino)-benzolsulfonamid, d.h. Formel (A2) mit R³ =Methoxy, und dessen Salze;
- (A2.6): N-[N-(4,6-Dimethoxypyrimidin-2-yl)-aminocarbonyl]-2-(diethyl-aminocarbonyl)-5-(ethoxycarbonylamino)-benzolsulfonamid, d.h. Formel (A2) mit R³ =Ethoxy, und dessen Salze;

Weitere Beispiele für Wirkstoffe der Formel (I) sind Verbindungen der Formel (A3) und deren Salze 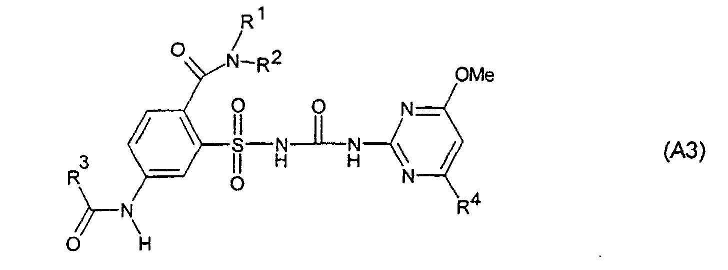 worin R¹, R² und R³ wie in Formel (I) definiert sind und Me = Methyl bedeutet und R⁴ = Methoxy, Chlor oder Methyl ist, vorzugsweise die Verbindungen (A3.1) bis (A3.6)
- (A3.1): N-[N-(4-Methoxy-6-methyl-pyrimidin-2-yl)-aminocarbonyl]-2-(dimethyl-aminocarbonyl)-5-(formylamino)-benzolsulfonamid, d.h. Formel (A3) mit R³ =Wasserstoff und R¹ = R²= Methyl, und dessen Salze;
- (A3.2): N-[N-(4-Methoxy-6-methyl-pyrimidin-2-yl)-aminocarbonyl]-2-(dimethyl-aminocarbonyl)-5-(acetylamino)-benzolsulfonamid, d.h. Formel (A3) mit R³ =Methyl und R¹ = R²= Methyl, und dessen Salze;
- (A3.3): N-[N-(4-Methoxy-6-methyl-pyrimidin-2-yl)-aminocarbonyl]-2-(dimethyl-aminocarbonyl)-5-(methoxycarbonyl)-benzolsulfonamid, d.h. Formel (A3) mit R³ =Methoxy und R¹ = R²= Methyl, und dessen Salze;
- (A3.4): N-[N-(4-Methoxy-6-methyl-pyrimidin-2-yl)-aminocarbonyl]-2-(diethyl-aminocarbonyl)-5-(formylamino)-benzolsulfonamid, d.h. Formel (A3) mit R³ =Wasserstoff und R¹ = R² = Ethyl, und dessen Salze;
- (A3.4): N-[N-(4-Methoxy-6-methyl-pyrimidin-2-yl)-aminocarbonyl]-2-(diethyl-aminocarbonyl)-5-(acetylamino)-benzolsulfonamid, d.h. Formel (A3) mit R³ =Methyl und R¹ = R²= Ethyl, und dessen Salze;
- (A3.5): N-[N-(4-Methoxy-6-methyl-pyrimidin-2-yl)-aminocarbonyl]-2-(diethyl-aminocarbonyl)-5-(methoxycarbonyl)-benzolsulfonamid, d.h. Formel (A3) mit R³ =Methoxy und R¹ = R²= Ethyl, und dessen Salze.

Die genannten Herbizide der Formel (I) und deren Salze hemmen das Enzym Acetolactatsynthase (ALS) und damit die Proteinsynthese in Pflanzen. Die Aufwandmenge der Herbizide der Formel (I) kann in einem weiten Bereich variieren, beispielsweise zwischen 0,001 und 0,5 kg AS/ha (AS/ha bedeutet "Aktivsubstanz pro Hektar" = bezogen auf 100%igen Wirkstoff). Bei Anwendungen mit Aufwandmengen von 0,01 bis 0,1 kg AS/ha der Herbizide der Formel (I), vorzugsweise der Formeln (A1), (A2) oder (A3), insbesondere (A1), wird im Vor- und Nachauflaufverfahren ein relativ breites Spektrum an annuellen und perennierenden Unkräutern, Ungräsern sowie Cyperaceen bekämpft. Bei den erfindungsgemäßen Kombinationen liegen die Aufwandmengen in der Regel niedriger, z. B. im Bereich von 0,5 bis 120 g AS/ha, vorzugsweise 2 bis 80 g AS/ha.
Die Wirkstoffe können in der Regel als wasserlösliches Spritzpulver (WP), wasserdispergierbares Granulat (WDG), wasseremulgierbares Granulat (WEG), Suspoemulsion (SE) oder Ölsuspensionskonzentrat (SC) formuliert werden.

Die im allgemeinen verwendeten Aufwandmengenverhältnisse A : B sind vorstehend angegeben und bezeichnen das Gewichtsverhältnis der beiden Komponenten A und B zueinander.

Zur Anwendung der Wirkstoffe der Formel (I) oder deren Salzen in Pflanzenkulturen kann es je nach Pflanzenkultur zweckmäßig sein, ab bestimmter Aufwandmengen einen Safener zu applizieren, um Schäden an der Kulturpflanze zu reduzieren oder zu vermeiden. Beispiele für geeignete Safener sind solche, die in Kombination mit Sulfonylharnstoff-Herbiziden, vorzugsweise, Phenylsulfonylharnstoffen Safenerwirkung entfalten. Geeignete Safener sind aus WO-A-96/14747 und der dort zitierten Literatur bekannt.
Folgende Gruppen von Verbindungen sind beispielsweise als Safener für die oben erwähnten herbiziden Wirkstoffe (A) geeignet:
a) Verbindungen vom Typ der Dichlorphenylpyrazolin-3-carbonsäure (S1), vorzugsweise Verbindungen wie
   1-(2,4-Dichlorphenyl)-5-(ethoxycarbonyl)-5-methyl-2-pyrazolin-3-carbonsäureethylester (S1-1, Mefenpyr-diethyl), und verwandte Verbindungen, wie sie in der WO 91/07874 beschrieben sind,
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2),
   1-(2,4-Dichlorphenyl)-5-isopropyl-pyrazol-3-carbonsäureethylester (S1-3),
   1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und
   EP-A-269 806 beschrieben sind.
c) Verbindungen vom Typ der Triazolcarbonsäuren (S1), vorzugsweise Verbindungen wie Fenchlorazol, d.h.
   1-(2,4-Dichlorphenyl)-5-trichlormethyl-(1 H)-1,2,4-triazol-3-carbonsäureethylester (S1-6), und verwandte Verbindungen (siehe EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazoiin-3-carbonsäureethylester (S1-7) oder 5-Phenyl-2-isoxazolin-3-carbonsäureethytester (S1-8) und verwandte Verbindungen, wie sie in WO 91/08202 beschrieben sind, bzw. der 5,5-Diphenyl-2-isoxazolin-carbonsäureethylester (S1-9, Isoxadifen-ethyl) oder -n-propylester (S1-10) oder der 5-(4-Fluorphenyl)-5-phenyl-2-isoxazolin-3-carbonsäureethylester (S1-11), wie sie in der Patentanmeldung
   (WO-A-95/07897) beschrieben sind.
e) Verbindungen vom Typ der 8-Chinolinoxyessigsäure (S2), vorzugsweise
   (5-Chlor-8-chinolinoxy)-essigsäure-(1-methyl-hex-1-yl)-ester (S2-1),
   (5-Chlor-8-chinolinoxy)-essigsäure-(1,3-dimethyl-but-1-yl)-ester (S2-2),
   (5-Chlor-8-chinolinoxy)-essigsäure-4-allyl-oxy-butylester (S2-3),
   (5-Chlor-8-chinolinoxy)-essigsäure-1-allyloxy-prop-2-ylester (S2-4),
   (5-Chlor-8-chinolinoxy)-essigsäureethylester (S2-5),
   (5-Chlor-8-chinolinoxy)-essigsäuremethylester (S2-6),
   (5-Chlor-8-chinolinoxy)-essigsäureallylester (S2-7),
   (5-Chlor-8-chinolinoxy)-essigsäure-2-(2-propyliden-iminoxy)-1-ethylester (S2-8),
   (5-Chlor-8-chinolinoxy)-essigsäure-2-oxo-prop-1-ylester (S2-9)
   und verwandte Verbindungen, wie sie in EP-A-86 750, EP-A-94 349 und
   EP-A-191 736 oder EP-A-0 492 366 beschrieben sind.
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester,
   (5-Chlor-8-chinolinoxy)-malonsäure-methyl-ethylester und verwandte Verbindungen, wie sie in EP-A-0 582 198 beschrieben sind.
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
   Für Wirkstoffe der Gruppe (B) sind die obengenannten Safener vielfach ebenfalls geeignet. Darüber hinaus eignen sich folgende Safener für die erfindungsgemäßen Herbizid-Kombinationen:
h) Wirkstoffe vom Typ der Pyrimidine, wie "Fenclorim" (PM, S. 512-511) (= 4,6-Dichlor-2-phenylpyrimidin),
i) Wirkstoffe vom Typ der Dichloracetamide, die häufig als Vorauflaufsafener (bodenwirksame Safener) angewendet werden, wie z.B.
   "Dichlormid" (PM, S. 363-364) (= N,N-Diallyl-2,2-dichloracetamid),
   AR-29148" (= 3-Dichloracetyl-2,2,5-trimethyl-1,3-oxazolidon von der Firma Stauffer),
   "Benoxacor" (PM, s. 102-103) (= 4-Dichloracetyl-3,4-dihydro-3-methyl-2H-1,4-benzoxazin).
   APPG-1292" (= N-Allyl-N[(1,3-dioxolan-2-yl)-methyl]dichloracetamid von der Firma PPG Industries),
   ADK-24" (= N-Allyl-N-[(allylaminocarbonyl)-methyl]-dichloracetamid von der Firma Sagro-Chem),
   AAD-67" oder AMON 4660" (= 3-Dichloracetyl-1-oxa-3-aza-spiro[4,5]decan von der Firma Nitrokemia bzw. Monsanto),
   "Diclonon" oder ABAS145138" oder ALAB145138" (= (= 3-Dichloracetyl-2,5,5-trimethyl-1,3-diazabiclyco[4.3.0]nonan von der Firma BASF) und
   "Furilazol" oder AMON 13900" (siehe PM, 637-638) (= (RS)-3-Dichloracetyl-5-(2-furyl)-2,2-dimethyloxazolidon)
j) Wirkstoffe vom Typ der Dichloracetonderivate, wie z.B.
   AMG 191" (CAS-Reg. Nr. 96420-72-3) (= 2-Dichlormethyl-2-methyl-1,3-dioxolan von der Firma Nitrokemia),
k) Wirkstoffe vom Typ der Oxyimino-Verbindungen, die als Saatbeizmittel bekannt sind, wie z.B.
   "Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
   "Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und
   "Cyometrinil" oder A-CGA-43089" (PM, S. 1304) (= (Z)-Cyanomethoxyimino (phenyl)acetonitril), das als Saatbeiz-Safener gegen Schäden von Metolachlor bekannt ist,
l) Wirkstoffe vom Typ der Thiazolcarbonsäureester, die als Saatbeizmittel bekannt sind, wie z.B.
   "Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
m) Wirkstoffe vom Typ der Napthalindicarbonsäurederivate, die als Saatbeizmittel bekannt sind, wie z.B.
   "Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
n) Wirkstoffe vom Typ Chromanessigsäurederivatre, wie z.B.
   ACL 304415" (CAS-Reg. Nr. 31541-57-8) (= 2-84-Carboxy-chroman-4-yl)-essigsäure von der Firma American Cyanamid),
o) Wirkstoffe, die neben einer herbiziden Wirkung gegen Schadpflanzen auch Safenerwirkung an Kulturpflanzen aufweisen, wie z.B.
   "Dimepiperate" oder AMY-93" (PM, S. 404-405) (= Piperidin-1-thiocarbonsäure-S-1-methyl-1-phenylethylester),
   "Daimuron" oder ASK 23" (PM, S. 330) (= 1-(1-Methyl-1-phenylethyl)-3-ptolyl-harnstoff),
   "Cumyluron" = AJC-940" (= 3-(2-Chlorphenylmethyl)-1-(1-methyl-1-phenylethyl)-harnstoff, siehe JP-A-60087254),
   "Methoxyphenon" oder ANK 049" (= 3,3'-Dimethyl-4-methoxybenzophenon),
   "CSB" (= 1-Brom-4-(chlormethylsulfonyl)-benzol) (CAS-Reg. Nr. 54091-06-4 von Kumiai).

Die Wirkstoffe (A) sind, gegebenenfalls in Gegenwart von Safenern, zur Bekämpfung von Schadpflanzen in Pflanzenkulturen geeignet, beispielsweise in wirtschaftlich bedeutenden Kulturen wie Getreide (z.B. Weizen, Gerste, Roggen, Hafer, Reis, Mais, Hirse), Zuckerrübe, Zuckerrohr, Raps, Baumwolle und Soja. Von besonderem Interesse ist dabei die Anwendung in dikotylen Kulturen wie Zuckerrübe, Raps, Baumwolle und Soja. Für die Kombinationen (A)+(B) sind diese Kulturen ebenfalls bevorzugt.

Als Kombinationspartner (B) kommen folgende Verbindungen der Untergruppen (B1) bis (B3) in Frage (die Bezeichnung der Herbizide erfolgt weitgehend mit dem "common name", soweit möglich nach der Referenzstelle "The Pesticide Manual" 11th Ed., British Crop Protection Council 1997, abgekürzt "PM"):
- (B1): Selektiv in einigen dikotylen Kulturen gegen monokotyle und dikotyle Schadpflanzen wirksame Herbizide, ausgewählt aus der Gruppe bestehend aus
a) in Zuckerrübe selektive Herbizide, ausgewählt aus der Gruppe bestehend aus
   (B1.1) Ethofumesate (PM, S. 484-486), d. h. Methansulfonsäure-(2-ethoxy-2,3 dihydro-3,3-dimethylbenzofuran-5-yl)-ester;
   (B1.2) Chloridazon (PM, S. 215-216), d. h. 5-Amino-4-chlor-2-phenyl-pyridazin-3(2H)-on;
   (B1.3) Triflusulfuron und dessen Ester, wie der Methylester, (PM, S. 1250-1252), d.h. 2-[4-(Dimethylamino)-6-(2,2,2-trifluorethoxy)-1,3,5-triazin-2-yl]-carbamoylsulfamoyl]-6-methyl-benzoesäure bzw. - methylester;
   (B1.4) Metamitron (PM, S. 799-801), d.h. 4-Amino-4,5-dihydro-3-methyl-6-phenyl- 1,2,4-triazin-5-on;
b) in Raps selektive Herbizide, ausgewählt aus der Gruppe bestehend aus
   (B1.5) Metazachlor (PM, S. 801-803), d. h. 2-Chlor-N-(2,6-dimethylphenyl)-N-(1H-pyrazol-1-ylmethyl)-acetanilid;
   (B1.6) Napropamide (PM, S. 866-868), d. h. (R,S)-N,N-Diethyl-2-(1-naphthyloxy)-propanamid;
   (B1.7) Carbetamide (PM, S. 184-185), d. h. (R)-Carbanilinsäure-1-(ethylcarbamoyl)-ethylester;
   (B1.8) Dimefuron (PM, S. 403-404), d. h. 3-[4-(5-tert.-Butyl-2,3-dihydro-2-oxo-1,3,4-oxadiazol-3-yl)-3-chlorphenyl]-N,N-dimethylharnstoff;
   (B1.9) Dimethachlor (PM, S. 406-407), 2-Chlor-N-(2,6-dimethylphenyl)-N-(2-methoxyethyl)-aceto-2',6'-xylilid;
c) in Baumwolle selektive Herbizide ausgewählt aus der Gruppe bestehend aus
   (B1.10) Norflurazon (PM, S. 886-888), d. h. 4-Chlor-5-(methylamino)-2-[3-(trifluormethyl)-phenyl]-3-(2H)-pyridazinon;
   (B1.11) Fluometuron (auch "Meturon", PM, S. 578-579), d. h. N,N-Dimethyl-N'-[3-(trifluormethyl)-phenyl]-harnstoff;
   (B1.12) Methylarsonsäure der Formel CH₃As(=O)(OH)₂ und deren Salze wie DSMA = Dinatriumsalz oder MSMA = Mononatriumsalz von Methylarsonsäure (PM, S. 821-823);
   (B1.13) Diuron (PM, S. 443-445), d. h. 3-(3,4-Dichlorphenyl)-1,1-dimethyl-harnstoff;
   (B1.14) Prometryn (Promethyrin) (PM, S. 1011-1013), d. h. N,N'-Bis(1-methylethyl)-6-methylthio)-2,4-diamino-1,3,5-triazin;
d) in Soja selektive Herbizide ausgewählt aus der Gruppe bestehend aus
   (B1.15) Trifluralin (PM, S. 1248-1250), d.h. α,α,α-trifluoro-2,6-dinitro-N,N-dipropyl-p-toluol;
   (B1.16) Sulfentrazone (PM, S. 1126-1127), d.h. 2',4'-dichloro-5'-(4-difluoromethyl-4,5-dihydro-3-methyl-5-oxo-1 H-1,2,4-triazol-1-yl)methansulfonanilid;
   (B1.17) Ethalfluralin (PM, S. 473-474), d.h. N-ethyl-α,α,α-trifluoro-N-(2-methylallyl)-2,6-dinitro-p-toluol;
   (B1.18) Vernolate (PM, S. 1264-1266), d.h. S-propyl dipropylthiocarbamat;
   (B1.19) Flumioxazin (PM, S. 576-577), d.h. N-(7-fluoro-3,4-dihydro-3-oxo-4-prop-2-ynyl-2H-1,4-benzoxazin-6-yl)cyclohex-1-ene-1,2-dicarboxamid;
- (B2): Selektiv in einigen dikotylen Kulturen überwiegend gegen dikotyle Schadpflanzen wirksame Herbizide, ausgewählt aus der Gruppe bestehend aus,
a) in Zuckerrübe selektive Herbizide ausgewählt aus der Gruppe bestehend aus
   (B2.1) Desmedipham (PM, S. 349-350), d.h., N-[3-(Ethoxycarbonylamino)phenyl]-carbaminsäure-phenyl-ester;
   (B2.2) Phenmedipham(PM, S. 948-949), d.h. N-[3-(Methoxycarbonylamino)phenyl]-carbaminsäure-3-methylphenyl-ester;
   (B2.3) Quinmerac (PM, S. 1080-1082), d.h., 7-Chlor-3-methyl-chinolin-8-carbonsäure;
b) in Raps selektive Herbizide ausgewählt aus der Gruppe bestehend aus
   (B2.4) Clopyralid (PM, S. 260-263), d. h. 3,6-Dichlorpyridin-2-carbonsäure und deren Salze;
   (B2.5) Pyridate (PM, S.1064-1066), d.h. O-(6-Chlor-3-phenylpyridazin-4-yl)-S-octyl-thiocarbonat;
   (B2.6) Ethametsulfuron-methyl (PM, S. 475-476), d. h. 2-{N-[N-(4-Ethoxy-6-methylamino-1,3,5-triazin-2-yl)-aminocarbonyl]-aminosulfonyl}-benzoesäuremethylester;
c) in Baumwolle selektive Herbizide ausgewählt aus der Gruppe bestehend aus
   (B2.7) Pyrithiobac und dessen Salze, z. B. das Natriumsalz, (PM, S. 1073-1075), d. h. 2-Chlor-6-(4,6-dimethoxypyrimidin-2-ylthio)-benzoesäure-natriumsalz;
d) in Soja selektive Herbizide ausgewählt aus der Gruppe bestehend aus
   (B2.8) Oxyfluorfen (PM, S. 919-921), d.h. 2-chloro-α,α,α-trifluoro-p-tolyl 3-ethoxy-4-nitrophenyl ether;
   (B2.9) Fomesafen (PM, S. 616-618), d.h. 5-(2-chloro-α,α,α-trifluoro-p-tolyloxyl)-N-methylsulfonyl-2-nitrobenzamid;
   (B2.10) Flumiclorac (PM, S. 575-576), d.h. [2-chloro-5-(cyclohex-1-ene-1,2-dicarboximido)-4-fluorophenoxy]essigsäure, und dessen Ester wie der Pentylester;
   (B2.11) 2,4-DB (PM, S. 337-339), d.h. 4-(2,4-dichlorophenoxy)buttersäure, und dessen Ester und Salze;
   (B2.12) Diclosulam (vgl. AG CHEM New Compound Review, Vol. 17, (1999) Seite 37, triazolopyrimidin-sulfonanilid-Herbizid); 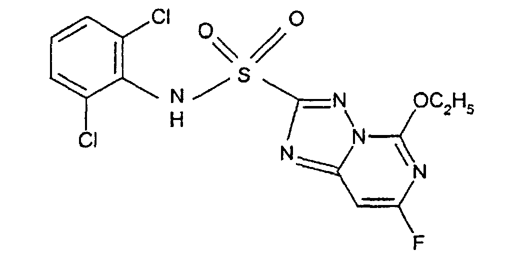
   (B2.13) Oxasulfuron (PM, S. 911-912), d.h. oxetan-3-yl 2-[(4,6-dimethylpyrimidin-2-yl)-carbamoylsulfamoyl]benzoat;
- (B3): Selektiv in einigen dikotylen Kulturen überwiegend gegen monokotyle Schadpflanzen wirksame Herbizide, ausgewählt aus der Gruppe bestehend aus
(B3.1) Profluazol (AGROW, No. 338 October 15^{th}, 1999, S. 26, PJB Publications Ltd. 1999, WO 97/15576), d.h. 1-chloro-N-[2-chloro-4-fluoro-5-[(6S, 7aR)-6-fluorotetrahydro-1,3-dioxo-1H-pyrrolo[1,2-c]imidazol-2(3H)-yl]phenyl]-methansulfonamid;
B3.2) Amicarbazone (AGROW, No. 338 October 15^{th}, 1999, S. 26, PJB Publications Ltd. 1999, DE 3839206), d.h. 4-amino-N-(1,1-dimethylethyl)-4,5-dihydro-3-(1-methylethyl)-5-oxo-1H-1,2,4-triazol-1-carboxamid);
B3.3) Pyriftalid (AGROW, No. 338 October 15^{th}, 1999, S. 26, PJB Publications Ltd. 1999, WO 91/05781), d.h. 7-[(4,6-dimethoxy-2-pyrimidinyl)thio]-3-methyl-1(3H)-isobenzofuranon;
B3.4) Trifloxysulfuron und dessen Salze, z.B. das Natriumsalz, (AGROW, No. 338 October 15^{th}, 1999, S. 26, PJB Publications Ltd. 1999, WO 92/16522), d.h. N-[[(4,6-dimethoxy-2-pyrimidinyl)amino]carbonyl]-3-(2,2,2-trifluoroethoxy)-2-pyridinesulfonamid;
B3.5) Epocholeone (AGROW, No. 338 October 15^{th}, 1999, S. 26, PJB Publications Ltd. 1999, WO 94/28011), d.h. 1-[(1S)-1-[(2R, 3R)-3-[(1S)-1-ethyl-2-methylpropyl]oxiranyl]ethyl]hexadeca-hydro-10a,12a-dimethyl-8,9-bis(1-oxopropoxy)-(1R, 3aS, 3bS, 6aS, 8S, 9R, 10aR, 10bS, 12aS)-6H-Benz[c]indeno[5,4-e]oxepin-6-one;
B3.6) Tepraloxydim (DE 4222261), d.h. 2-[1-[[[(2E)-3-chloro-2-propenyl]oxy]imino]propyl]-3-hydroxy-5-(tetrahydro-2H-pyran-4-yl)-2-cyclohexen-1-on;

Wenn die Kurzform des "common name" verwendet wird, so sind damit alle gängigen Derivate, wie die Ester und Salze, und Isomere, insbesondere optische Isomere umfaßt, insbesondere die handelsüblichen Form bzw. Formen. Die angegebenen chemischen Verbindungsnamen bezeichnen zumindest eine der von dem "common name" umfaßten Verbindungen, häufig eine bevorzugte Verbindung. Bei Sulfonylharnstoffen sind mit Salzen auch die umfaßt, die durch Austausch eines Wasserstoffatoms an der Sulfonamidgruppe durch ein Kation entstehen.

Bevorzugt sind Herbizid-Kombinationen aus einer oder mehreren Verbindungen (A) mit einer oder mehreren Verbindungen der Gruppe (B1) oder (B2) oder (B3).

Weiter bevorzugt sind Kombinationen von Verbindungen (A) mit einer oder mehreren Verbindungen (B) nach dem Schema:
(A) + (B1) + (B2), (A) + (B1) + (B3), (A) + (B2) + (B3) oder (A) + (B1) + (B2) +(B3)

Dabei sind auch solche Kombinationen erfindungsgemäß, denen noch ein oder mehrere weitere agrochemische Wirkstoffe anderer Struktur [Wirkstoffe (C)] zugesetzt werden wie
(A) + (B1) + (C), (A) + (B2) + (C) oder (A) + (B3) + (C),
(A) + (B1) + (B2) + (C), (A) + (B1) + (B3) + (C), (A) + (B2) + (B3) + (C) oder
(A) + (B1) + (B2) +(B3) + (C).

Für Kombinationen der letztgenannten Art mit drei oder mehr Wirkstoffen gelten die nachstehend insbesondere für erfindungsgemäßen Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Von besonderem Interesse ist die Anwendung von herbiziden Mitteln mit einem Gehalt an folgenden Verbindungen (A) + (B):
(A1.1) + (B1.1), (A1.1) + (B1.2), (A1.1) + (B1.3), (A1.1) + (B1.4),
(A1.1) + (B1.5), (A1.1) + (B1.6), (A1.1) + (B1.7), (A1.1) + (B1.8),
(A1.1) + (B1.9), (A1.1) + (B1.10), (A1.1) + (B1.11), (A1.1) + (B1.12),
(A1.1) + (B1.13), (A1.1) + (B1.14), (A1.1) + (B1.15), (A1.1) + (B1.16),
(A1.1) + (B1.17), (A1.1) + (B1.18), (A1.1) + (B1.19),
(A1.1) + (B2.1), (A1.1) + (B2.2.), (A1.1) + (B2.3), (A1.1) + (B2.4),
(A1.1) + (B2.5), (A1.1) + (B2.6), (A1.1) + (B2.7), (A1.1) + (B2.8),
(A1.1) + (B2.9), (A1.1) + (B2.10), (A1.1) + (B2.11), (A1.1) + (B2.12),
(A1.1) + (B2.13),
(A1.1) + (B3.1), (A1.1) + (B3.2), (A1.1) + (B3.3), (A1.1) + (B3.4),
(A1.1) + (B3.5), (A1.1) + (B3.6),
(A1.2) + (B1.1), (A1.2) + (B1.2), (A1.2) + (B1.3), (A1.2) + (B1.4),
(A1.2) + (B1.5), (A1.2) + (B1.6), (A1.2) + (B1.7), (A1.2) + (B1.8),
(A1.2) + (B1.9), (A1.2) + (B1.10), (A1.2) + (B1.11), (A1.2) + (B1.12),
(A1.2) + (B1.13), (A1.2) + (B1.14), (A1.2) + (B1.15), (A1.2) + (B1.16),
(A1.2) + (B1.17), (A1.2) + (B1.18), (A1.2) + (B1.19),
(A1.2) + (B2.1), (A1.2) + (B2.2.), (A1.2) + (B2.3), (A1.2) + (B2.4),
(A1.2) + (B2.5), (A1.2) + (B2.6), (A1.2) + (B2.7), (A1.2) + (B2.8),
(A1.2) + (B2.9), (A1.2) + (B2.10), (A1.2) + (B2.11), (A1.2) + (B2.12),
(A1.2) + (B2.13),
(A1.2) + (B3.1), (A1.2) + (B3.2), (A1.2) + (B3.3), (A1.2) + (B3.4)
(A1.2) + (B3.5), (A1.2) + (B3.6),
(A1.5) + (B1.1), (A1.5) + (B1.2), (A1.5) + (B1.3), (A1.5) + (B1.4),
(A1.5) + (B1.5), (A1.5) + (B1.6), (A1.5) + (B1.7), (A1.5) + (B1.8),
(A1.5) + (B1.9),(A1.5) + (B1.10),(A1.5) + (B1.11),(A1.5) + (B1.12),
(A1.5) + (B1.13), (A1.5) + (B1.14), (A1.5) + (B1.15), (A1.5) + (B1.16),
(A1.5) + (B1.17), (A1.5) + (B1.18), (A1.5) + (B1.19),
(A1.5) + (B2.1), (A1.5) + (B2.2.), (A1.5) + (B2.3), (A1.5) + (B2.4),
(A1.5) + (B2.5), (A1.5) + (B2.6), (A1.5) + (B2.7), (A1.5) + (B2.8),
(A1.5) + (B2.9), (A1.5) + (B2.10), (A1.5) + (B2.11), (A1.5) + (B2.12),
(A1.5) + (B2.13),
(A1.5) + (B3.1), (A1.5) + (B3.2), (A1.5) + (B3.3), (A1.5) + (B3.4)
(A1.5) + (B3.5), (A1.5) + (B3.6),
(A2.1) + (B1.1), (A2.1) + (B1.2), (A2.1) + (B1.3), (A2.1) + (B1.4),
(A2.1) + (B1.5), (A2.1) + (B1.6), (A2.1) + (B1.7), (A2.1) + (B1.8),
(A2.1) + (B1.9), (A2.1) + (B1.10), (A2.1) + (B1.11), (A2.1) + (B1.12),
(A2.1) + (B1.13), (A2.1) + (B1.14), (A2.1) + (B1.15), (A2.1) + (B1.16),
(A2.1) + (B1.17), (A2.1) + (B1.18), (A2.1) + (B1.19),
(A2.1) + (B2.1), (A2.1) + (B2.2.), (A2.1) + (B2.3), (A2.1) + (B2.4),
(A2.1) + (B2.5), (A2.1) + (B2.6), (A2.1) + (B2.7), (A2.1) + (B2.8),
(A2.1) + (B2.9), (A2.1) + (B2.10), (A2.1) + (B2.11), (A2.1) + (B2.12),
(A2.1) + (B2.13),
(A2.1) + (B3.1), (A2.1) + (B3.2), (A2.1) + (B3.3), (A2.1) + (B3.4)
(A2.1) + (B3.5), (A2.1) + (B3.6),

Dabei sind die oben genannten Aufwandmengenbereiche und Aufwandmengenverhältnisse jeweils bevorzugt.

In Einzelfällen kann es sinnvoll sein, eine oder mehrere, vorzugsweise eine der Verbindungen (A) mit mehreren Verbindungen (B) aus den Klassen (B1), (B2) und (B3) zu kombinieren.

Weiterhin können die erfindungsgemäßen Kombinationen zusammen mit anderen agrochemischen Wirkstoffen beispielsweise aus der Gruppe der Safener, Fungizide, Insektizide und Pflanzenwachstumsregulatoren oder im Pflanzenschutz üblichen Zusatzstoffen und Formulierungshilfsmittel eingesetzt werden.
Zusatzstoffe sind beispielsweise Düngemittel und Farbstoffe.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Avena spp., Alopecurus spp., Brachiaria spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden kann, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamen Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber mono- und dikotylen Schadpflanzen aufweisen, werden die Kulturpflanzen nur unwesentlich oder gar nicht geschädigt.
Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da Emteverluste beim Lagern hierdurch verringert oder völlig verhindert werden können.

Aufgrund ihrer herbiziden und pflanzenwachstumsregulatorischen Eigenschaften können die erfindungsgemäßen Mittel zur Bekämpfung von Schadpflanzen in gentechnisch veränderten oder durch Mutationsselektion erhaltenen Kulturpflanzen eingesetzt werden. Diese Kulturpflanzen zeichnen sich in der Regel durch besondere vorteilhafte Eigenschaften aus, wie Resistenzen gegenüber herbiziden Mitteln oder Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind z.B. transgene Pflanzen mit erhöhtem Stärkegehalt oder veränderter Qualität der Stärke oder solche mit anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten (siehe z.B. US 5,162,602; US 4,761,373; US 4,443,971). Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
   Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).
Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in dikotylen Kulturen wie Zuckerrübe, Raps, Baumwolle und Soja, dadurch gekennzeichnet, daß man ein oder mehrere Herbizide des Typs (A) mit einem oder mehreren Herbiziden des Typs (B) auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Gegenstand der Erfindung ist auch die Verwendung der neuen Kombinationen aus Verbindungen (A)+(B) zur Bekämpfung von Schadpflanzen, vorzugsweise in Pflanzenkulturen.

Die erfindungsgemäßen Wirkstoffkombinationen können sowohl als Mischformulierungen der zwei Komponenten (A) und (B), gegebenenfalls mit weiteren agrochemischen Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Suspensionskonzentrate (SC), Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen, wie anderen Herbiziden, Fungiziden, Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden:
Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate (SC) können auf Wasser- oder Ölbasis sein. Sie können beispielsweise durch Naß-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischem unter Verwendung von wäßrigen organischen Lösungsmitteln und gegebenenfalls von weiteren Tensiden, wie sie z.B. oben bei den anderen Formulierungstypen bereits aufgeführt sind, herstellen.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:
In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Staubförmige Formulierungen enthalten meistens 5 bis 20 Gew.-% an Wirkstoff, versprühbare Lösungen etwa 0,2 bis 25 Gew.-% Wirkstoff.
Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz-und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Herbiziden durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie C₁₂/C₁₄-Fettalkohol-diglykolethersulfat-Natrium (Genapol® LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkyl-polyglykolethersulfate auch als Penetrationshilfsmittel und Wirkungsverstärker für eine Reihe anderer Herbizide, unter anderem auch für Herbizide aus der Reihe der Imidazolinone geeignet sind; siehe z.B. EP-A-0502014.

Die herbizide Wirkung kann auch durch die Verwendung von Pflanzenölen verstärkt werden. Unter dem Begriff Pflanzenöle werden Öle aus ölliefemden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oder C₁-C₂₀-Alkyl-C₁₀C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil:
Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethyleste) oder Stefes Mero® (Stefes, Deutschland, nachfolgend Mero genannt, Hauptbestandteil: Rapsölmethylester) enthalten sein.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hiffstoffen ergeben kann.

### A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (7Triton X 207), 3 Gew.-Teilen Isotridecanolpolyglykolether (8 EO) und 71 Gew.-Teilen paraffinischem Mineralöl (Siedebereich z.B. ca. 255 bis 277EC) mischt und in einer Reibkugelmühle auf eine Feinheit von unter 5 Mikron vermahlt.
d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
e) Ein in Wasser dispergierbares Granulat wird erhalten indem man
   75 Gew.-Teile eines Wirkstoffs/Wirksstoffgemischs,
   10 Gew.-Teile ligninsulfonsaures Calcium,
   5 Gew.-Teile Natriumlaurylsulfat,
   3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile eines Wirkstoffs/Wirksstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### Herbizide Wirkung (Feldversuche)

Die Samen oder Rhizomstücke von typischen Schadpflanzen wurden ausgelegt und unter natürlichen Freilandbedingungen herangezogen. Die Behandlung mit den erfindungsgemäßen Mitteln erfolgte nach dem Auflaufen der Schadpflanzen in der Regel im 2 bis 8-Blattstadium in verschiedenen Dosierungen mit einer Wasseraufwandmenge von umgerechnet 100 bis 400 l/ha.

Nach der Anwendung (ca. 4 - 6 Wochen nach Applikation) wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle). Die Boniturwerte von jeweils 4 Parzellen wurden gemittelt.

Die Ergebnisse sind in den nachfolgenden Tabellen angegeben, wobei in Klammern die Wirkung bei unabhängiger Anwendung der Wirkstoffe A und B angegeben ist.

**Tabelle 1:**

| Herbizide Wirkung | | |
|---|---|---|
| Wirkstoff(e) | Aufwandmenge gAS/ha | Herbizide Wirkung an Setaria Lutescens Schadwirkung in % |
| A) A1.1 | 35 | 30 |
| | 70 | 97 |
| B) Ethametsulfuron (B2.6) | 15 | 33 |
| A+B) | 35+15 | 99(30+33) |

Behandlung im 6-8 Blattstadium, Bonitierung 27 Tage nach Applikation

**Tabelle 2:**

| Herbizide Wirkung | | |
|---|---|---|
| Wirkstoff(e) | Aufwandmenge gAS/ha | Herbizide Wirkung an Setaria Lutescens Schadwirkung in % |
| A) A1.1 | 35 | 30 |
| | 70 | 97 |
| B) ®Betanal progress = | | 0 |
| (Phenmedipham (B2.2)+ | 24 | |
| Desmedipham (B2.1)+ | 192 | |
| Ethofumesate (B1.1)) | 93 | |
| A+B) | 35+(24+192+93) | 65 (30+0) |

Behandlung im 6-8 Blattstadium, Bonitierung 27 Tage nach Applikation

**Tabelle 3:**

| Herbizide Wirkung | | |
|---|---|---|
| Wirkstoff(e) | Aufwandmenge gAS/ha | Herbizide Wirkung an Setaria Lutescens Scahdwirkung in % |
| A) A1.1 | 35 | 65 |
| | 70 | 87 |
| B) Fumesafen (B2.9) | 240 | 25 |
| A+B) | 35+240 | 93 (65+25) |

Behandlung in 2 Blattstadium, Bonitierung 39 Tage nach Applikation

**Tabelle 4:**

| Herbizide Wirkung | | |
|---|---|---|
| Wirkstoff(e) | Aufwandmenge gAS/ha | Herbizide Wirkung an Setaria Lutescens Schadwirkung in % |
| A) A1.1 | 35 | 65 |
| | 70 | 85 |
| B) Pyrithiobac (B2.7) | 105 | 25 |
| A+B) | 35+105 | 93(65+25) |

Behandlung in 6-8 Blattstadium, Bonitierung 27 Tage nach Applikation

## Patentansprüche

1. Herbizid-Kombinationen mit einem wirksamen Gehalt an Komponenten (A) und (B), wobei
(A) ein oder mehrere Herbizide aus der Gruppe der Verbindungen der Formel (I) oder deren Salzen bedeutet, 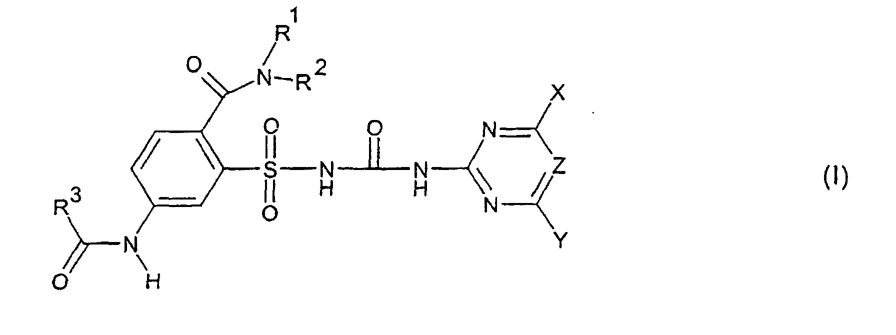
worin
R¹ Wasserstoff oder (C₁-C₄)Alkyl,
R² Wasserstoff oder (C₁-C₄)Alkyl,
R³ Wasserstoff, (C₁-C₄)Alkyl, (C₁-C₄)Alkoxy, (C₂-C₄)Alkenoxy, (C₂-C₄)Alkinoxy, (C₃-C₆)Cycloalkyl, wobei jeder der 5 letztgenannten Reste unsubstituiert oder durch einen oder mehrere Reste aus der Gruppe Halogen, Cyano, (C₁-C₄)Alkoxy und (C₁-C₄)Alkylsulfonyl substituiert ist,
einer der Reste X und Y Halogen, (C₁-C₄)Alkyl, (C₁-C₄)Alkoxy, (C₁-C₄)Alkylthio, wobei jeder der drei letztgenannten Reste unsubstituiert oder durch einen oder mehrere Reste aus der Gruppe Halogen, (C₁-C₄)Alkoxy und (C₁-C₄)Alkylthio substituiert ist,
und der andere der Reste X und Y (C₁-C₄)Alkyl, (C₁-C₄)Alkoxy oder (C₁-C₄)Alkylthio ist, wobei jeder der drei letztgenannten Reste unsubstituiert oder durch einen oder mehrere Reste aus der Gruppe Halogen, (C₁-C₄)Alkoxy und (C₁-C₄)Alkylthio substituiert ist, und
Z CH oder N bedeuten,
und
B) bedeutet ein oder mehrere Herbizide aus der Gruppe der Verbindungen, bestehend aus
(B1) selektiv in einigen dikotylen Kulturen gegen monokotyle und dikotyle Schadpflanzen wirksamen Herbiziden, ausgewählt aus der Gruppe bestehend aus:
(B1.1) Ethofumesate
(B1.2) Chloridazon
(B1.3) Triflusulfuron
(B1.4) Metamitron
(B1.5) Metazachlor
(B1.6) Napropamide
(B1.7) Carbetamide
(B1.8) Dimefuron
(B1.9) Dimethachlor
(B1.10) Norflurazon
(B1.11) Fluometuron
(B1.12) Methylarsonsäure
(B1.13) Diuron
(B1.14) Prometryn
(B1.15) Trifluralin
(B1.16) Sulfentrazone
(B1.17) Ethalfluralin
(B1.18) Vernolate
(B1.19) Flumioxazin
(B2) selektiv in einigen dikotylen Kulturen überwiegend gegen dikotyle Schadpflanzen wirksamen Herbiziden, ausgewählt aus der Gruppe bestehend aus
(B2.1) Desmedipham
(B2.2) Phenmedipham
(B2.3) Quinmerac
(B2.4) Clopyralid
(B2.5) Pyridate
(B2.6) Ethametsulfuron-methyl
(B2.7) Pyrithiobac
(B2.8) Oxyfluorfen
(B2.9) Fomesafen
(B2.10) Flumiclorac
(B2.11) 2,4-DB
(B2.12) Diclosulam
(B2.13) Oxasulfuron
(B3) selektiv in einigen dikotylen Kulturen überwiegend gegen monokotyle Schadpflanzen wirksamen Herbiziden ausgewählt aus der Gruppe bestehend aus
(B3.1) Profluazol
(B3.2) Amicarbazone
(B3.3) Pyriftalid
(B3.4) Trifloxysulfuron
(B3.5) Epocholeone
(B3.6) Tepraloxydim

2. Herbizid-Kombination nach Anspruch 1 , worin als Komponente (A) eine oder mehrere Verbindungen der Formel (A1) oder deren Salze, 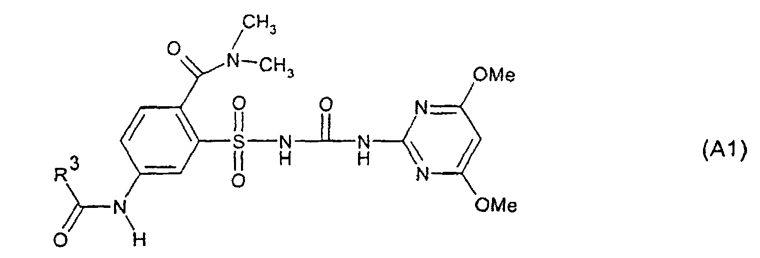 worin R³ die in Formel (I) genannte Bedeutung hat und Me = Methyl ist, enthalten ist.

3. Herbizid-Kombinationen nach Anspruch 1 oder 2, zusätzlich enthaltend eine oder mehrere weitere Komponenten aus der Gruppe enthaltend agrochemische Wirkstoffe anderer Art, im Pflanzenschutz übliche Zusatzstoffe und Formulierungshilfsmittel.

4. Verfahren zur Bekämpfung von Schadpflanzen, worin eine Herbizid-Kombination, definiert gemäß einem oder mehreren der Ansprüche 1 bis 3, gemeinsam oder getrennt im Vorauflauf, Nachauflauf oder im Vor- und Nachauflauf auf die Pflanzen, Pflanzenteile, Pflanzensamen oder die Fläche auf der die Pflanzen wachsen appliziert wird.

5. Verfahren nach Anspruch 4 zur selektiven Bekämpfung von Schadpflanzen in Pflanzenkulturen.

6. Verfahren nach Anspruch 5 zur Bekämpfung von Schadpflanzen in dikotylen Pflanzenkulturen.

7. Verfahren nach Anspruch 5 oder 6, worin die Pflanzenkulturen gentechnisch verändert oder durch Mutationsselektion erhalten sind.

8. Verwendung der nach einem der Ansprüche 1 bis 3 definierten Herbizid-Kombination zur Bekämpfung von Schadpflanzen.

## Claims

1. A herbicide combination with an effective amount of components (A) and (B), where
(A) denotes one or more herbicides from the group of the compounds of the formula (I) or their salts, 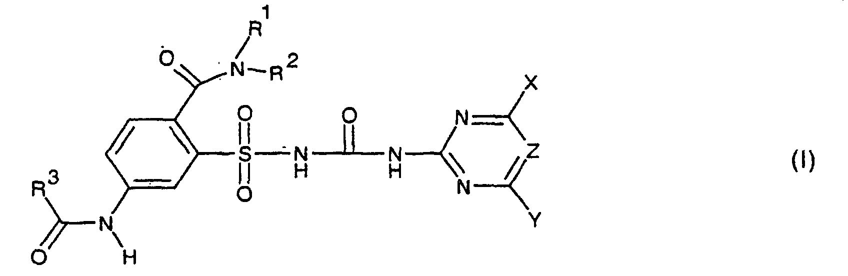 where
R¹ is hydrogen or (C₁-C₄)alkyl,
R² is hydrogen or (C₁-C₄)alkyl,
R³ is hydrogen, (C₁-C₄)alkyl, (C₁-C₄)alkoxy, (C₂-C₄)alkenoxy, (C₂-C₄)alkynoxy, (C₃-C₆)cycloalkyl, each of the 5 last-mentioned radicals being unsubstituted or substituted by one or more radicals selected from the group consisting of halogen, cyano, (C₁-C₄)alkoxy and (C₁-C₄)alkylsulfonyl,
one of the radicals X and Y is halogen, (C₁-C₄)alkyl, (C₁-C₄)alkoxy, (C₁-C₄)alkylthio, each of the three last-mentioned radicals being unsubstituted or substituted by one or more radicals selected from the group consisting of halogen, (C₁-C₄)alkoxy and (C₁-C₄)alkylthio,
and the other of the radicals X and Y is (C₁-C₄)alkyl, (C₁-C₄)alkoxy or (C₁-C₄)alkylthio, each of the three last-mentioned radicals being unsubstituted or substituted by one or more radicals selected from the group consisting of halogen, (C₁-C₄)alkoxy and (C₁-C₄)alkylthio,
Z is CH or N,
and
B) denotes one or more herbicides from the group of the compounds consisting of
(B1) herbicides which act selectively in some dicotyledonous crops against monocotyledonous and dicotyledonous harmful plants, selected from the group consisting of:
(B1.1) ethofumesate
(B1.2) chloroidazon
(B1.3) triflusulfuron
(B1.4) metamitron
(B1.5) metazachlor
(B1.6) napropamide
(B1.7) carbetamide
(B1.8) dimefuron
(B1.9) dimethachlor
(B1.10) norflurazon
(B1.11) fluometuron
(B1.12) methylarsonic acid
(B1.13) diuron
(B1.14) prometryn
(B1.15) trifluralin
(B1.16) sulfentrazone
(B1.17) ethalfluralin
(B1.18) vernolate
(B1.19) flumioxazin
(B2) herbicides which act selectively in some dicotyledonous crops, predominantly against dicotyledonous harmful plants, selected from the group consisting of
(B2.1) desmedipham
(B2.2) phenmedipham
(B2.3) quinmerac
(B2.4) clopyralid
(B2.5) pyridate
(B2.6) ethametsulfuron-methyl
(B2.7) pPyrithiobac
(B2.8) oxyfluorfen
(B2.9) fomesafen
(B2.10) flumiclorac
(B2.11) 2,4-DB
(B2.12) diclosulam
(B2.13) oxasulfuron
(B3) herbicides which act selectively in some dicotyledonous crops, predominantly against monocotyledonous harmful plants, selected from the group consisting of
(B3.1) profluazole
(B3.2) amicarbazone
(B3.3) pyriftalide
(B3.4) trifloxysulfuron
(B3.5) epocholeone
(B3.6) tepraloxydim

2. A herbicide combination as claimed in claim 1, which comprises, as component (A), one or more compounds of the formula (A1) or their salts, 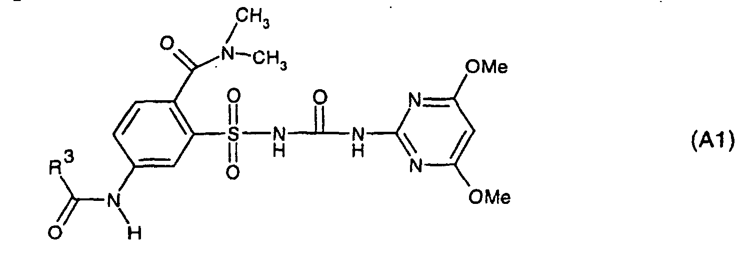 where R³ is as defined in formula (I) and Me = methyl.

3. A herbicide combination as claimed in claim 1 or 2, additionally comprising one or more further components from the group consisting of agrochemically active ingredients of a different type, formulation auxiliaries and additives conventionally used in crop protection.

4. A method of controlling harmful plants wherein a herbicide combination as defined in one or more of claims 1 to 3 is applied, either jointly or separately, either pre-emergence, post-emergence or pre- and post-emergence, to the plants, parts of the plants, seeds of the plants or the area on which the plants grow.

5. The method as claimed in claim 4 for the selective control of harmful plants in plant crops.

6. The method as claimed in claim 5 for the control of harmful plants in dicotyledonous plant crops.

7. The method as claimed in claim 5 or 6, wherein the plant crops are genetically modified or obtained by mutation/selection.

8. The use of the herbicide combination defined as in any of claims 1 to 3 for controlling harmful plants.

## Revendications

1. Combinaisons d'herbicides, contenant une quantité active de composants (A) et (B), dans lesquelles
(A) représente un ou plusieurs herbicides choisis dans l'ensemble des composés de formule (I) ou leurs sels 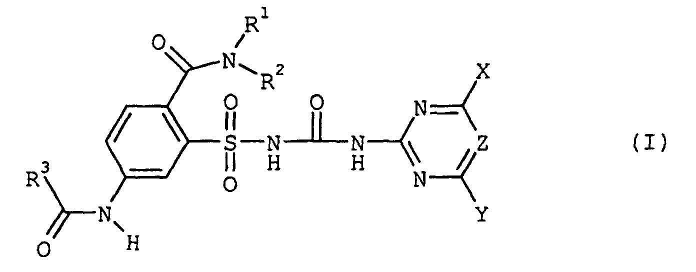 formule dans laquelle
R¹ est un atome d'hydrogène ou un groupe alkyle en C₁-C₄,
R² est un atome d'hydrogène ou un groupe alkyle en C₁-C₄,
R³ est un atome d'hydrogène, un groupe alkyle en C₁-C₄, alcoxy en C₁-C₄, alcénoxy en C₂-C₄, alcynoxy en C₂-C₄, cycloalkyle en C₃-C₆, chacun des cinq derniers radicaux ci-dessus étant non substitué, ou substitué par un ou plusieurs résidus choisis dans l'ensemble comprenant les groupes halogéno, cyano, alcoxy en C₁-C₄ et alkylsulfonyle en C₁-C₄,
l'un des radicaux X et Y est un groupe halogéno, alkyle en C₁-C₄, alcoxy en C₁-C₄, alkylthio en C₁-C₄, chacun des trois derniers radicaux ci-dessus étant non substitué ou étant substitué par un ou plusieurs résidus choisis dans l'ensemble comprenant les groupes halogéno, alcoxy en C₁-C₄ et alkylthio en C₁-C₄,
et l'autre des radicaux X et Y est un groupe alkyle en C₁-C₄, alcoxy en C₁-C₄ ou alkylthio en C₁-C₄, où chacun des trois derniers radicaux ci-dessus est non substitué ou est substitué par un ou plusieurs résidus choisis dans l'ensemble comprenant les groupes halogéno, alcoxy en C₁-C₄ et alkylthio en C₁-C₄, et
Z est CH ou N,
et
(B) désigne un ou plusieurs herbicides de l'ensemble des composés comprenant
(B1) les herbicides ayant une activité sélective, dans certaines cultures de dicotylédones, à l'encontre des mauvaises herbes monocotylédones et dicotylédones, choisis dans l'ensemble comprenant les herbicides suivants :
(B1.1) Ethofumésate
(B1.2) Chloridazon
(B1.3) Triflusulfuron
(B1.4) Métamitron
(B1.5) Métazachlor
(B1.6) Napropamide
(B1.7) Carbétamide
(B1.8) Diméfuron
(B1.9) Diméthachlor
(B1.10) Norflurazon
(B1.11) Fluométuron
(B1.12) Acide méthylarsonique
(B1.13) Diuron
(B1.14) Prometryne
(B1.15) Trifluraline
(B1.16) Sulfentrazone
(B1.17) Ethalfluraline
(B1.18) Vermolate
(B1.19) Flumioxazine
(B2) les herbicides ayant une activité sélective, dans certaines cultures de dicotylédones, essentiellement à l'encontre des mauvaises herbes dicotylédones, choisis dans l'ensemble comprenant les herbicides suivants :
(B2.1) Desmédipham
(B2.2) Phénmédipham
(B2.3) Quinmérac
(B2.4) Clopyralid
(B2.5) Pyridate
(B2.6) Ethametsulfuron-méthyl
(B2.7) Pyrithiobac
(B2.8) Oxyfluorfène
(B2.9) Fomesafène
(B2.10) Flumiclorac
(B2.11) 2,4-DB
(B2.12) Diclosulame
(B2.13) Oxasulfuron
(B3) les herbicides ayant une activité sélective dans certaines cultures de dicotylédones, essentiellement à l'encontre des mauvaises herbes monocotylédones, choisis dans l'ensemble comprenant les herbicides suivants :
(B3.1) Profluazol
(B3.2) Amicarbazone
(B3.3) Pyriftalide
(B3.4) Trifloxysulfuron
(B3.5) Epocholéone
(B3.6) Tépraloxydime.

2. Composition d'herbicides selon la revendication 1, dans laquelle le composant (A) est constitué d'un ou plusieurs composés de formule (A1), ou de leurs sels 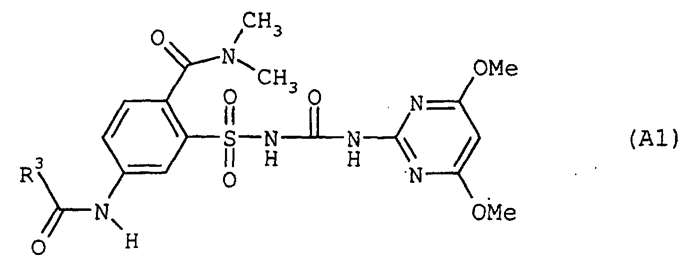 dans laquelle R³ a les significations données dans la formule (I), et Me est le groupe méthyle.

3. Combinaison d'herbicides selon la revendication 1 ou 2, qui contient en outre un ou plusieurs autres composants choisis dans l'ensemble comprenant les matières actives agrochimiques d'un autre type, des additifs et des auxiliaires de formulation usuels dans la protection des végétaux.

4. Procédé pour lutter contre les mauvaises herbes, dans lequel une combinaison d'herbicides selon l'une ou plusieurs des revendications 1 à 3 est appliquée, d'une manière commune ou séparément, en prélevée, en post-levée, ou encore en prélevée et en post-levée, sur les plantes, les parties de plantes, les semences de plantes ou sur la surface sur laquelle croissent les plantes.

5. Procédé selon la revendication 4, pour la lutte sélective contre les mauvaises herbes dans les cultures de végétaux.

6. Procédé selon la revendication 5, pour lutter contre les mauvaises herbes dans les culture de plantes dicotylédones.

7. Procédé selon la revendication 5 ou 6, dans lequel les plantes de culture ont subi une modification génétique ou sont obtenues par sélection par mutation.

8. Utilisation de la combinaison d'herbicides selon l'une des revendications 1 à 3 pour lutter contre les mauvaises herbes.
